Europäisches Patentamt

European Patent Office

Office européen des brevets

(19)

(11) Publication number: **0 100 670**
**B1**

(12) # EUROPEAN PATENT SPECIFICATION

(45) Date of publication of patent specification: **03.12.86**

(21) Application number: **83304417.5**

(22) Date of filing: **29.07.83**

(51) Int. Cl.⁴: **D 21 H 5/12,** H 01 B 1/20,
C 08 J 5/04

(54) Conductive film for packaging.

(73) Proprietor: **MISHIMA PAPER CO. LTD**
**506 Harada**
**Fuji-shi Shizuoka-ken (JP)**

(73) Proprietor: **KUREHA KAGAKU KOGYO**
**KABUSHIKI KAISHA**
**9-11 Horidome-cho 1-chome Nihonbashi Chuo-ku**
**Tokyo (JP)**

(72) Inventor: **Katou, Itsupei**
**1637 Shimotokari Nagaizumi-cho**
**Sunto-gun Shizuoka-ken (JP)**
Inventor: **Kouno, Tomihisa**
**507 Hakusui-Ryo of Mishima Seishi K.K. 970**
**Harada**
**Fuji-shi Shizuoka-ken (JP)**
Inventor: **Egawa, Harunobu**
**20 Idekura Nakoso-machi**
**Iwaki-shi Fukushima-ken (JP)**
Inventor: **Kouyama, Toshitaka**
**16-1 Maehara Nishiki-machi**
**Iwaki-shi Fukushima-ken (JP)**

(74) Representative: **Woods, Geoffrey Corlett et al**
**J.A. KEMP & CO. 14 South Square Gray's Inn**
**London WC1R 5EU (GB)**

**The file contains technical information
submitted after the application was filed and
not included in this specification**

(30) Priority: **30.07.82 JP 134421/82**
**18.05.83 JP 85905/83**

(43) Date of publication of application:
**15.02.84 Bulletin 84/07**

(45) Publication of the grant of the patent:
**03.12.86 Bulletin 86/49**

(84) Designated Contracting States:
**DE FR GB**

(56) References cited:
**EP-A-0 039 292**
**GB-A-1 410 107**
**GB-A-1 522 854**
**US-A-4 216 055**
**US-A-4 347 104**

**0 100 670**

## Description

This invention relates to the preparation of a conductive film suitable for use as packaging electronic parts.

In the course of packaging, shipping and storing electronic parts such as semiconductor, IC, LSI, print circuit and magnetic tape, these products should be protected from the adsorption of dust and other annoying troubles caused by electrostatic charge. In particular, presently prevailing C-MOS IC is very sensitive to the electrostatic charge and apt to incur dielectric breakdown. Accordingly, the prevention of electrification is indispensable for the C-MOS IC. In order to protect those products from such electrostatic faults, it is worth-while to pack them with a conductive film having a low surface resistivity.

As to the conductivity, the conductive films as the packaging material are demanded to have the surface resistivity of from about $10^8$—$10^6 \Omega \cdot$ cm to about $10^0$—$10^{-2} \Omega \cdot$ cm. The surface resistivity around $10^8$—$10^6 \Omega \cdot$ cm is sufficient to prevent the adhesion of minute dust by the electrostatic charge, the surface resistivity around $10^6$—$10^0 \Omega \cdot$ cm is efficient to prevent the electrostatic faults and further the surface resistivity around $10^0$—$10^{-2} \Omega \cdot$ cm is efficient to shield electromagnetic waves. In addition, the packaging materials for print circuit, IC, records and the like are desirable to be transparent for enabling the inspection of the packed contents by observing them therethrough.

Hitherto, there have been proposed some conductive films, for instance, a conductive paper prepared by mixing cellulose pulp slurry with conductive inorganic fine powders such as carbon black followed by processing the mixture into paper (Japanese Patent Laying Open No. 68194/81) and a conductive paper prepared by mixing paper-making pulp slurry with chopped carbon fibers followed by processing the mixture into paper (Japanese Patent Publication No. 32766/70). However, these conventionally known conductive papers are all not transparent but colored black or white since much amount of carbon black is incorporated therein or the matrix thereof consisting essentially of paper-making pulp is opaque. Furthermore, since they contain cellulose pulp as a main component, it is completely impossible to heat-seal. Besides, there is known another conductive paper formed from synthetic pulp and conductive additives, for instance, a conductive paper in which acrylic synthetic pulp forms the maxtric thereof and carbon fibers are dispersed in the matrix (Japanese Patent Laying Open No. 18702/75). However, such conductive paper is also not transparent due to the opaqueness of both the matrix and the incorporated conductive additives. Synthetic resin films deposited with vaporized metal such as nickel is likewise known as the conductive film, but it has drawbacks such as exfoliation of the metallic layer from the vacuum metallized film and high cost. The other proposed conductive film containing antistatic additives is rather tacky and so it is impossible to avoid the adhesion of dust.

The present invention provides a process for the preparation of a conductive film for use as packaging for electronic parts, which process comprises mixing a thermoplastic synthetic pulp slurry with short conductive fibers, forming a raw paper sheet from the resultant mixture by means of paper-making apparatus and heating the raw paper sheet at a temperature higher than the melting point of the thermoplastic synthetic pulp, which melting point being from 100 to 260°C, and under a pressure of from 39.2 to 196.1 kN/m (40 to 200 kg/cm) employing a calender so as to obtain a conductive film comprising a transparent matrix of a thermoplastic resin having short conductive fibers in contact with one another dispersed therein and having a thickness of not more than 100 µm, an opacity of 30% or less and a surface resistivity of $1 \times 10^8 \Omega \cdot$ cm or less.

It is possible to overcome the defects found in conventional conductive films or papers. A conductive film having sufficient conductivity to protect the packed electronic parts from electrostatic faults can be produced. A film according to the present invention can have a transparency enabling the inspection of the packed parts by observing them through the film. The film can also be sealed.

According to a first aspect of the invention, the short conductive fiber is a carbon fiber. The carbon fiber hereinafter described in detail is typically contained in the conductive film by the amount of 0.5 to 20% by volume, preferably 1 to 10% by volume thereof, while the residue of 99.5 to 80% by volume is the thermoplastic resin matrix.

According to a second aspect of the invention, the short conductive fiber is a metal fiber or a metal-coated fiber selected from the group consisting of stainless steel fiber, aluminum fiber, brass fiber, carbon fiber coated with aluminum or nickel and glass fiber coated with aluminum or nickel. The metal fiber or the metal-coated fiber hereinafter described in detail is typically contained in the conductive film by the amount of 0.5 to 30% by volume thereof, while the residue of 99.5 to 70% by volume is the thermoplastic resin matrix.

A chemical pulp may be employed in the present process from the viewpoints of convenience and cost. A slurry of a thermoplastic synthetic pulp and a chemical pulp is mixed with the conductive fibers. The chemical pulp is present in an amount of less than 50% by volume, preferably less than 30% by volume, based on the total volume of the thermoplastic synthetic pulp and the chemical pulp. When a chemical pulp is employed, the conductive carbon fibers are preferably present in an amount of less than 6% by volume while the conductive metal or metal-coated fibers are preferably present in an amount of less than 15% by volume, based on the total volume of the fibers, thermoplastic synthetic pulp and chemical pulp.

In the present invention, it has been found that the white and opaque raw sheet formed by mixing the synthetic pulp, the conductive fiber and, as occasion demands, the chemical pulp in the specified blending

2

ratio mentioned above followed by subjecting to the paper machine is still opaque and has a higher surface resistivity after the calender finish usually employed in the manufacturing of paper under the normal conditions of temperature and pressure, but the same sheet becomes transparent and the surface resistivity thereof is reduced to the extent of the raw sheet or less after subjecting to the calender treatment under the condition of the temperature higher than the melting point of the thermoplastic synthetic pulp. Furthermore, the conductive film produced in such a manner has been found to exhibit the heat-sealability inherent to the thermoplastic resin.

The thermoplastic synthetic pulp of the invention includes pulp consisting of thermoplastic resin, thermoplastic synthetic fiber and thermoplastic synthetic fibrous binder. As the thermoplastic resin, polyolefins, polyacrylonitriles, polyesters, polyamides, polyvinyl alcohols, etc. are usually employable. That is, the thermoplastic synthetic pulps which can be processed into the raw paper sheet by the paper machine and thereafter can be softened and melted into a transparent film by heating under pressure are all employable in the present invention. The melting point of the thermoplastic synthetic pulp is in the range of 100 to 260°C. From the viewpoint of carrying out the heat-seal without difficulty, the melting point is preferably lower than 200°C, and practically lower than 170°C.

According to the invention, though the thermoplastic resin is usually employed after forming a pulp thereof, the resin may be employed in the form of fiber as well provided the effects of the invention are not spoiled. Therefore, a synthetic pulp herein includes a pulp per se (an aggregate of the fibers) and the fiber (separate fibers).

Among those synthetic pulps, polyolefin pulp or fiber is especially preferable. The polyolefin includes, for instance, polyethylene, polypropylene, copolymer of ethylene with propylene, copolymer of ethylene or propylene with α-olefin, copolymer of ethylene or propylene with other copolymerizable comonomer such as vinyl acetate and acrylic acid, mixture of these polymers and a polymer obtained by chemically modifying these polymers. This polyolefin pulp or fiber is processed advantageously in combination with polyvinyl alcohol binder usually employed in the manufacturing of paper.

The carbon fiber as the short conductive fiber according to the first aspect of the invention may be any one of those prepared from the starting material such as pitch, rayon, polyacrylonitrile and so on. The graphite fiber which is obtained by further heating the carbon fiber is also advantageously employed as the conductive fiber. Therefore, the carbon fiber described in the specification and claims is defined to include the graphite fiber.

As the form of carbon fiber, short fiber (so-called chopped fiber) having a fiber length of 1 to 25 mm and a fiber diameter of 5 to 30 μm is preferable. The carbon fiber of shorter than 1 mm in length is likely removed by dropping off during the steps of forming the raw paper sheet to create a difference of the conductive fiber content between both surfaces of the conductive film, so that it is not desirable for ensuring a uniform surface resistivity. Though the carbon fiber of longer than 25 mm in length is advantageous for producing a conductive film having a low surface resistivity with low content of the fiber, such too long fiber results in a bulky sheet and in the formation of uneven dispersion or mass of the conductive fiber in the inside of conductive film. With respect to a fiber diameter, the commercially available carbon fiber having a diameter of 5 to 30 μm may be employable. For obtaining high transparency and high surface resistivity, the fiber having a relatively large diameter is preferable, and on the other hand, for obtaining high transparency and low surface resistivity, the fiber having a relatively small diameter is preferable. The fiber diameter can be appropriately selected depending upon the final use of the conductive film. The amount of the carbon fiber contained in the conductive film is typically in the range of 0.5 to 20% by volume of the conductive film. The less amount of the carbon fiber may cause an insufficient conductivity of the conductive film, while the more amount of the carbon fiber may lead to the damage of transparency of the conductive film.

The short conductive fiber according to the second aspect of the present invention is a metal fiber or an inorganic fiber such as carbon fiber and glass fiber coated with a metal on its surface. In addition to these conductive fibers, a material that can be transformed into short fiber and has a small surface resistivity, for example, a vacuum metallized film cut fibrously and organic conductive fiber such as polyacetylene is also employable.

The metal fiber includes steel fiber, stainless steel fiber, aluminum fiber, brass fiber, copper fiber and bronze fiber, but the stainless steel fiber, aluminum fiber and brass fiber which are resistant to oxidation are preferable. The metal fiber is manufactured in various diameters generally by an extrusion process, skiving process and the like. In the present invention, the employable metal fiber typically has a diameter of 1 to 100 μm, preferably 20 μm or less, and a fiber length of 1 to 25 mm, preferably 3 to 15 mm. The metal fiber of more than 100 μm in diameter provides the conductive film of thickness exceeding 100 μm, so that such too large diameter is undesirable. In addition, such metal fiber of too large diameter is apt to precipiate in the one side of the conductive film due to its weight, providing the conductive film unevenly dispersed with the conductive fiber. Further, although the metal fiber of relatively large diameter is advantageous for reducing the opaqueness of the conductive film, it is preferable to use the fiber having the diameter of 20 μm or less in order to disperse the fiber uniformly in the steps of forming the raw paper sheet. The metal fiber having a fiber length of less than 1 mm is not desirable because such too short fiber makes the formation of fiber network in the conductive film difficult. On the other hand, the use of the metal fiber having a fiber length of 25 mm or longer results in the easy formation of a vacant area of no conductive fiber or the formation of a huge mass of the conductive fiber in the conductive film, so that such too long fiber is undesirable.

The metal for coating the inorganic fiber such as the carbon fiber or glass fiber is preferably an oxidation-resistant metal such as aluminum and nickel. The employable metal-coated fiber in the present invention has typically a diameter of 1 to 100 μm, preferably 20 μm or less and a fiber length of 1 to 25 mm, preferably 3 to 15 mm, as in the metal fiber described hereinbefore. The carbon fiber used as the core material of the metal-coated conductive fiber is the same as the carbon fiber hereinbefore described. As the form of the core carbon fiber, a short fiber (so-called chopped fiber) having a fiber length of 1 to 25 mm and a diameter of 5 to 30 μm is preferable. The core carbon fiber may be coated with aluminum or nickel in thickness of about 0.5 to 3 μm by electroplating or vacuum deposition. When the glass fiber is used as the core material, the chopped strand of glass having a length of 7 to 10 mm and a diameter of about 5 to 15 μm is preferably employable and may be coated with aluminum or nickel in thickness of about 3 to 5 μm by means of vacuum deposition or dipping into a metal bath. The chopped strand of glass coated with metal is available commercially.

The chemical pulp which may be employed in the present invention includes, for instance, needle-leaf tree bleached kraft pump (NBKP) and needle-leaf tree bleached sulfite pulp (NBSP). By using the synthetic pulp with the chemical pulp, it is possible to enhance the machinability of paper machine for producing the conductive film of the invention and to save the production cost. However, a small mixing ratio of the chemical pulp is preferable for obtaining a favorable transparency and heat-sealability of conductive film. Though the use of no chemical pulp results in the best transparency and heat-sealability, the small amount of the chemical pulp may be preferably incorporated into the conductive film from the practical viewpoint. Thus, the incorporating amount of the chemical pulp is at most equal to that of the synthetic pulp by volume and is preferably smaller than that of the synthetic pulp. For obtaining the conductive film of low basis weight, a long fiber pulp such as manila hemp pulp may be employable. In addition, various other kinds of chemical pulp, for example, soda pulp, semichemical pulp and unbleached cellulose pulp are not obstructive in this invention.

The conductive film is produced according to the invention mainly by applying paper-manufacturing technology. The matrix consisting of the thermoplastic synthetic resin is formed from the above-mentioned thermoplastic synthetic pulp. The conductive film may be produced by the following manner.

First, the thermoplastic synthetic pulp is mixed with the short conductive fiber. In mixing, the thermoplastic synthetic fiber is in advance dispersed in water, preferably warm water to prepare the slurry thereof, and separately the conductive fiber is likewise dispersed in water. After that, both dispersions are mixed with each other. The mixing ratio of the synthetic pulp to the conductive fiber has an important influence on the characteristic of the conductive film such as the surface resistivity and the transparency. With too little conductive fiber, the mutual contact of the conductive fiber to form the network thereof in the conductive film becomes insufficient, and so the conductive film having a small surface resistivity cannot be obtained. With too much conductive fiber, the conductive film becomes too opaque. The optimum mixing ratio of the conductive fiber varies with the kind of conductive fiber and the size thereof.

In case that the conductive fiber is the carbon fiber, 80 to 99.5% by volume of the synthetic pulp and 20 to 0.5% by volume of the carbon fiber are mixed with each other in the foregoing mixing step. For obtaining the conductive film with the surface resistivity of less than $1 \times 10^8 \Omega \cdot$ cm, at least 0.5% by volume of the carbon fiber is indispensable, while more than 20% by volume of the carbon fiber may decrease the transparency of the conductive film and raise the opacity thereof to more than 30%. In particular, it is preferable to mix 7% or less by volume of the carbon fiber having the diameter of 5 to 10 μm, 12% or less by volume of the same fiber having the diameter of 10 to 15 μm and 20% or less by volume of the same fiber having the diameter of 15 to 30 μm.

On the other hand, in case that the conductive fiber is the metal fiber or metal-coated fiber, 70 to 99.5% by volume of the synthetic pulp and 30 to 0.5% by volume of the metal or metal-coated fiber are mixed with each other in the foregoing mixing step. For obtaining the conductive film with the surface resistivity of less than $1 \times 10^8 \Omega \cdot$ cm, particularly less than $1 \times 10^6 \Omega \cdot$ cm, at least 0.5% by volume, preferably more than 3% by volume of the metal or metal-coated fiber is indispensable. For obtaining the conductive film with the opacity of less than 30%, the amount of the metal or metal-coated fiber should be less than 30% by volume, preferably less than 10% by volume while depending on the diameter thereof. In particular, it is preferable to mix 7% or less by volume of the metal or metal-coated fiber having the diameter of 5 to 10 μm, 12% or less by volume of the same fiber having the diameter of 10 to 15 μm, 20% or less by volume of the same fiber having the diameter of 15 to 20 μm and 30% or less by volume of the same fiber having the diameter of more than 20 μm.

When the chemical pulp is incorporated into the conductive film, the chemical pulp after beating may be preferably mixed with the synthetic pulp and the conductive fiber in the foregoing mixing step. The mixture should be sufficiently stirred and homogenized before sending to the paper machine.

For forming the raw paper sheet from the above-mentioned mixture, the paper machine provided with wire cloth, press and dryer, which is conventionally used in the manufacturing of paper, is advantageously employed. The dried raw paper sheet after subjecting to the paper machine is then heated and pressed to be made transparent. The heat-treatment under pressure may be carried out by a calender which makes paper glossy and the surface of paper smooth in the conventional paper-manufacturing process. The

4

pressure condition is appropriately selected in a linear pressure ranging from 39.2 to 196.1 kN/m (40 to 200 kg/cm). Further, the heat-treatment under pressure according to the invention can also be carried out with a calender for plastic processing provided that the same conditions of temperature and pressure are applied. The temperature condition in the heat-treatment under pressure is different from that in the usual calender-treatment and it is indispensable to heat the raw paper sheet above the melting point of the thermoplastic synthetic pulp. For instance, the heating temperature for the thermoplastic resin of polyolefin is about 130—200°C. This heat-treatment under pressure is necessary for making the thermoplastic resin matrix formed from the thermoplastic synthetic pulp transparent and also for reducing the surface resistivity of the resultant conductive film.

The conductive film produced according to the present invention has a thickness of 100 μm or less from the view points of transparency, flexibility and the like.

The conductive film produced in the above-mentioned manner evenly disperses the short conductive fibers in the transparency filmy matrix of thermoplastic resin while retaining transparent areas therein. The dispersion of the short conductive fiber in the matrix is in the electrical contact state, by which each conductive fiber is brought into contact with another conductive fiber. Accordingly, the conductive film becomes electrically conductive by many contacts of the conductive fibers and the small surface resistivity of less than $1 \times 10^8 \Omega \cdot cm$, particularly less than $1 \times 10^6 \Omega \cdot cm$ is obtainable. Furthermore, light is transmitted by the transparent areas of the conductive film wherein no conductive fiber is presented, and so the opacity of less than 30% is obtainable.

The present invention will be further explained hereinafter with referring to the drawings.

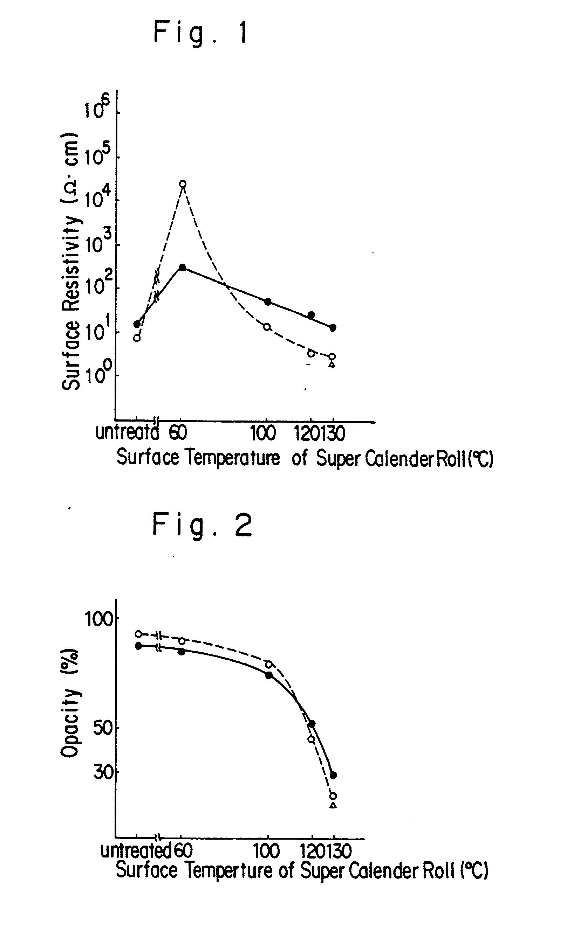

Fig. 1 illustrates the relation between the temperature at which the raw paper sheet was heat-treated by a super calender and the surface resistivity of the conductive film produced by the heat-treatment. For forming the sheet, SWP® UL400 (polyethylene resin, m.p.: 122°C, specific gravity: 0.9, average fiber length: 0.9 mm, brightness: above 94%) as the thermoplastic synthetic pulp, wood pulp (NBKP, the specific gravity thereof is determined to be 0.9 since a normal NBKP paper after the super calender treatment under high pressure has a density of around 0.9 g/cm³) as the chemical pulp and carbon fiber (Kureha Carbon Fiber Chop C-203, graphitized, fiber length: 3 mm, diameter: 12.5 μm, specific resistance: $5.5 \times 10^{-3} \Omega \cdot cm$), hereinafter referred to as CF, were employed. Three kinds of the raw paper sheet with basis weight of 50 g/m² were formed by making the mixing ratio of CF constant and by changing the mixing ratio of both SWP and NBKP. The beating degree of NBKP was 300 ml CSF (determined by means of Canadian standard freeness tester). SWP and CF were dispersed into water separately and then both were homogeneously mixed with NBKP. The linear pressure of the super calender was adjusted to 58.8 kN/m (60 Kg/cm) constantly and the speed thereof was adjusted to 4.5 m/min constantly. The surface temperature of the super calender rolls was changed as shown in Fig. 1. Then, the surface resistivity of the heat-treated sheet, i.e., the conductive film was determined.

In Fig. 1, the dot marked with o represents the conductive film with the mixing ratio of SWP/NBKP/CF=70/30/5 in weight ratio (68/29/3% by volume), the dot marked with ● represents that of SWP/NBKP/CF=50/50/5 in weight ratio (48.5/48.5/3% by volume) and the dot marked with Δ represents that of SWP/NBKP/CF=80/20/5 in weight ratio (78/19/3% by volume).

As apparent from Fig. 1, there is almost no difference in the surface resistivity between the original sheets not subjected to the heat-treatment by the super calender, while the surface resistivity once increases after subjecting to the heat-treatment by the super calender at a temperature of 60°C which is in the range of the normal temperature condition in the manufacturing of paper. When the temperature is further raised and approaching to the melting point of the synthetic pulp SWP, the surface resistivity of the conductive film is found to be approaching to that of the untreated original sheet, and moreover when SWP melts completely, the surface resistivity of the conductive film is found to be lower than that of the untreated original sheet. Furthermore, it is also apparent from Fig. 1 that the above-mentioned tendency of the surface resistivity is remarkable when the mixing ratio of SWP is large.

Incidentally, surface resistivity described in the specification and claims is represented by the following formula:

$$\rho = \frac{RTW}{L}$$

wherein ρ is the surface resistivity ($\Omega \cdot cm$), L is the distance (cm) between the electrodes, R is the determined resistance (Ω), T is the thickness (cm) of the specimen and W is the length of electrode (cm). The determination of the surface resistivity in the present invention is based on ASTM D-257.

The resistance (R) and the thickness (T) of the untreated original sheet and the conductive film with the mixing ratio of SWP/NBKP/CF=70/30/5 after subjected to the heat-treatment at 130°C were determined and listed in the following Table 1. The influence of the heat-treatment on the surface resistivity (ρ) was inspected from the measurement of R and T.

**0 100 670**

TABLE 1

|  | Resistance (Ω) | Thickness (μm) | Surface resistivity (Ω · cm) |
| --- | --- | --- | --- |
| Untreated sheet | 2727 | 133.5 | $10.4 \times 10^0$ |
| Conductive film | 2136 | 77.0 | $4.7 \times 10^0$ |
| Ratio of conductive film/ untreated sheet | 78.3% | 57.7% | 45.2% |

From Table 1, it can be understood that the reduction of the surface resistivity does not depend only on the reduction of the thickness since the determined resistance is likewise reduced.

Fig. 2 illustrates the relation between the opacity of the same specimen as in Fig. 1 and the temperature at which the heat-treatment under pressure was carried out.

As apparent from Fig. 2, under the constant linear pressure of 58.8 kN/m (60 Kg/cm), the opacity of the conductive film is not changed remarkably in the temperature range up to the softening point of SWP (103°C), while the opacity is rapidly reduced at the temperature above the softening point. Furthermore, it is apparent from Fig. 2 that the conductive film becomes more transparent when the mixing ratio of SWP is larger.

Incidentally, the determination of the opacity described in the specification and claims is based on TAPPI Standard T425 OS-75 and carried out by means of photovolt photoelectric reflection meter.

The results of Fig. 1 and Fig. 2 shows that the heating at the temperature higher than the melting point of the thermoplastic synthetic pulp is indispensable to obtain the desired surface resistivity and opacity.

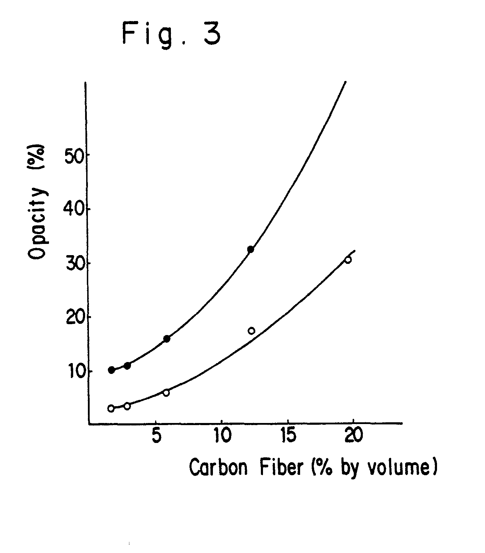

Fig. 3 illustrates the relation between the opacity of the conductive film and the mixing ratio of the conductive carbon fiber incorporated therein. In Fig. 3, the dot marked with o represents the conductive film produced from the thermoplastic synthetic pulp (SWP) and the carbon fiber while changing the mixing ratio of the carbon fiber, and the dot marked with ● represents the conductive film produced from the synthetic pulp (SWP), the chemical pulp (NBKP) and the carbon fiber while making the relative ratio of SWP/NBKP constant (70/30 in weight ratio) and changing the mixing ratio of the carbon fiber. As apparent from Fig. 3, the conductive film containing no chemical pulp has the opacity of less than 30% under the incorporating amount of the carbon fiber less than 20% by volume, while the conductive film containing the chemical pulp has the opacity of less than 30% even if the carbon fiber is incorporated by the amount of about 10% by volume.

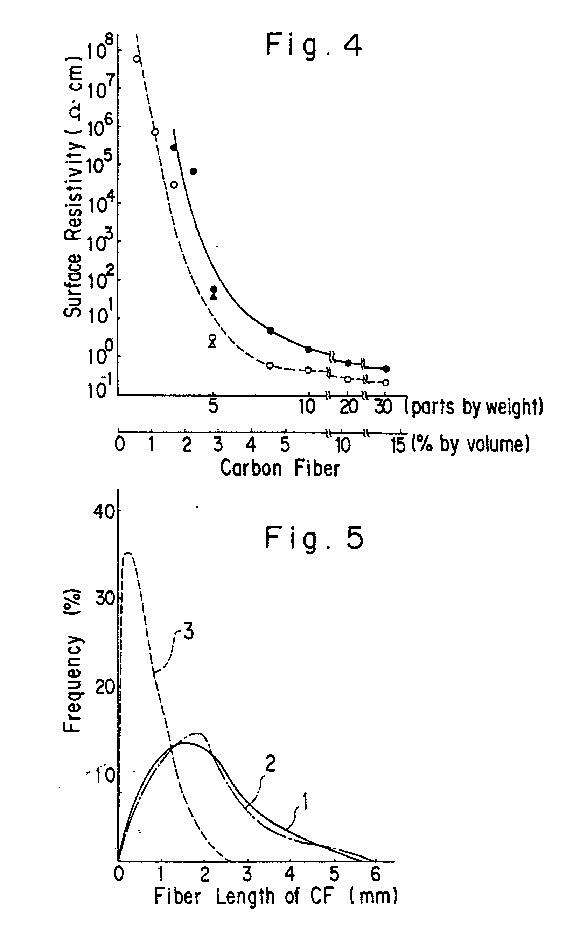

Fig. 4 illustrates the relation between the surface resistivity of the conductive film and the mixing ratio of the carbon fiber incorporated therein. In Fig. 4, the dot marked with o represents the conductive film having the basis weight of 50 g/m² and the mixing ratio of SWP/NBKP=70/30 in weight ratio, the dot marked with ● represents that having the basis weight of 30 g/m² and the mixing ratio of SWP/NBKP=70/30 in weight ratio, the dot marked with Δ represents that having the basis weight of 50 g/m² and the mixing ratio of SWP/NBKP=80/20 in weight ratio and the dot marked with ▲ represents that having the basis weight of 30 g/m² and the mixing ratio of SWP/NBKP=80/20 in weight ratio. The carbon fiber was incorporated into each conductive film by the amount indicated with the scale of abscissa in Fig. 4.

Fig. 4 shows that for obtaining the surface resistivity of, for instance, $1 \times 10^6 \Omega \cdot cm$, 4 parts by weight of the carbon fiber may be incorporated into the conductive film of 30 g/m² basis weight, while 2 parts by weight of the carbon fiber may be incorporated into the conductive film of 50 g/m² basis weight. Furthermore, Fig. 4 shows that the conductive film having a larger basis weight may contain a smaller amount of the carbon fiber to obtain the same value of surface resistivity. When taking into consideration the result of Fig. 1 that the high mixing ratio of the synthetic pulp makes the surface resistivity low and the results of Fig. 4 that the surface resistivity varies largely by the small change in the mixing ratio of the carbon fiber if the mixing ratio is in the range of less than 5 parts by weight, while the variation of the surface resistivity is small if the mixing ratio of the carbon fiber is in the range of more than 5 parts by weight, the optimum content of each component in the conductive film can easily be determined to obtain the desired surface resistivity.

Fig. 5 illustrates the distribution of fiber length of the carbon fiber in the conductive film and the variation of this distribution of fiber length between before and after the heat-treatment under pressure according to the present invention. The bascissa of Fig. 5 represents the fiber length of the carbon fiber and the ordinate of Fig. 5 represents the frequency.

In Fig. 5, curve 1 represents the distribution of fiber length of the carbon fiber in the conductive film having the mixing ratio of SWP/NBKP/CF=70/30/5 in weight ratio curve 2 represents that in the untreated raw sheet having the same mixing ratio and curve 3 represents that in a paper produced from only NBKP and CF without the synthetic pulp SWP, the mixing ratio of which is NBKP/CF=100/5 in weight ratio.

Comparing curve 1 with curve 2, it can be found that the distribution of fiber length of the carbon fiber

6

scarcely varies between before and after the heat-treatment under pressure by the super calender according to the invention. The distribution of curve 3 shows that the almost all carbon fibers are broken into fine particles in the paper produced without the synthetic pulp. The tendency to break the carbon fiber into fine particles as shown in curve 3 was confirmed to be reduced in proportion to the increase in the mixing ratio of the thermoplastic synthetic pulp.

According to the present invention, the carbon fiber is dispersed in the thermoplastic resin matrix of the conductive film without being broken into fine particles as shown in Fig. 5. Therefore, the conductive carbon fiber can exist in the matrix while forming a lot of contacts therebetween like network structure even if the mixing ratio thereof is relatively low. In other words, the carbon fiber is dispersed in the matrix in the electrical contact state to make the finally obtainable film electrically conductive. This is the reason why the conductive film of the invention can have a low surface resistivity even if the content of carbon fiber is relatively low.

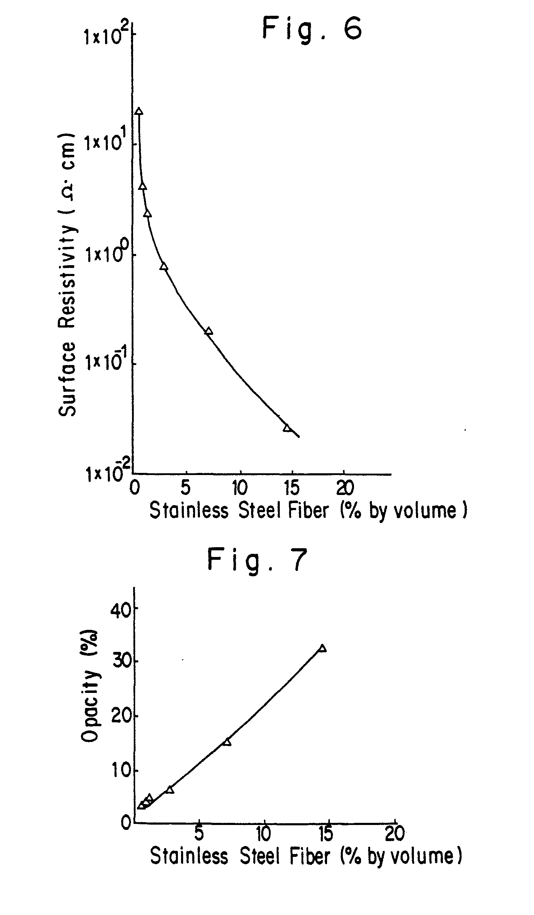

Fig. 6 illustrates the relation between the surface resistivity of the conductive film and the mixing ratio of the stainless steel fiber incorporated therein. Fig. 7 illustrates the relation between the opacity of the conductive film and the mixing ratio of the same stainless steel fiber.

The conductive film of Fig. 6 and Fig. 7 has the basis weight of about 50 g/cm$^2$ and was produced from SWP® UL410 (product of Mitsui Petroleum Chemical Co., Ltd., polyethylene resin, m.p.: 123°C, specific gravity: 0.9, average fiber length: 0.9 mm, brightness, above 94%) as the thermoplastic synthetic resin and the stainless steel fiber (product of Nippon Metallurgy Co., Ltd., average fiber length: 3 mm, diameter of fiber: 8 μm, specific gravity: 7.8) as the conductive fiber while changing the mixing ratio thereof. SWP® UL410 and the stainless steel fiber were dispersed in water separately and then mixed with each other. The raw paper sheet formed from these materials was dried at 80 to 100°C and then heat-treated at 130°C under the linear pressure of 58.8 kN/m (60 Kg/cm) by the super calender, thereby producing the conductive film with various mixing ratio.

Fig. 6 shows that the conductive film incorporated with more than 0.5% by volume of stainless steel fiber has a sufficiently low surface resistivity less than $1 \times 10^2 \Omega \cdot$ cm and that the surface resistivity is rapidly reduced when the stainless steel fiber is incorporated by the amount of less than about 2 to 3% by volume. Accordingly, the conductive film having the desired low surface resistivity can be produced by appropriately adjusting the mixing ratio of the stainless steel fiber in the range of more than 0.5% by volume.

Fig. 7 shows that though the opacity of the conductive film is increased in proportion to the increase in the mixing ratio of the stainless steel fiber, the conductive film with the opacity of less than 30% may be produced by incorporating the stainless steel fiber by the amount of 12% by volume or less. When the stainless steel fiber is incorporated by the amount of 8% by volume or less, the opacity becomes 20% or less, and furthermore when it is incorporated by the amount of 5% by volume or less, the opacity becomes 15% or less and the conductive film with superior transparency is obtainable.

The optimum mixing ratio of the stainless steel fiber is in the range of 3 to 5% by volume from the view points of both the surface resistivity and the transparency.

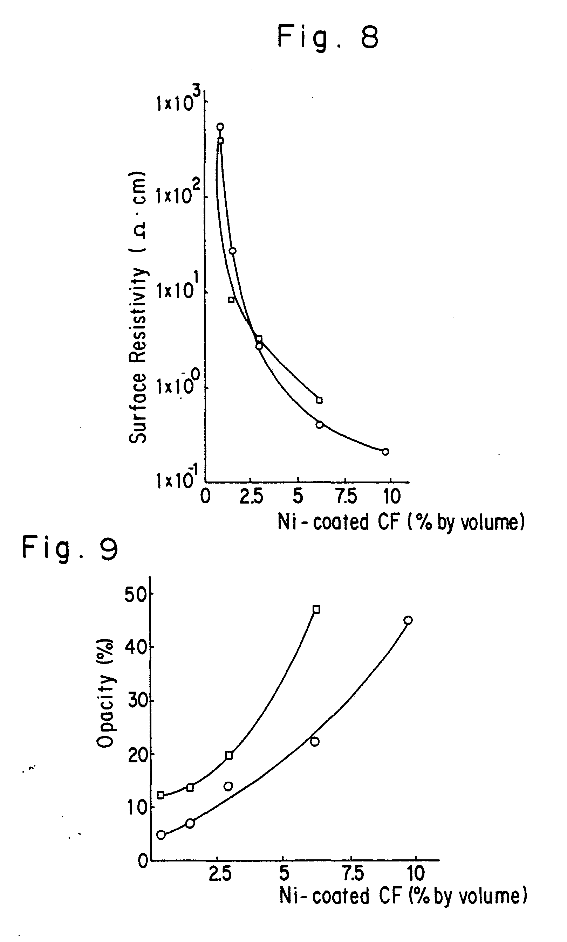

Fig. 8 illustrates the relation between the surface resistivity of the conductive film and the mixing ratio of the nickel-coated carbon fiber incorporated therein. Fig. 9 illustrates the relation between the opacity of the same conductive film and the mixing ratio of the same conductive fiber as Fig. 8.

The conductive film of Fig. 8 and Fig. 9 was produced in the same manner as in Fig. 6 and Fig. 7 except for employing as the conductive fiber the carbon fiber (product of Kureha Chemical Industry, Ltd., carbon fiber prepared from pitch, average fiber length: 6 mm, diameter of fiber: 12.5 μm) of which surface was coated with nickel by chemical plating. The nickel coat has a thickness of about 1 μm. The conductive film thus produced is dotted in Fig. 8 and Fig. 9 with the mark o.

On the other hand, another conductive film was also produced in the same manner as in Fig. 6 and Fig. 7 except for employing the above-mentioned nickel-coated carbon fiber and displacing 20% by volume of the thermoplastic synthetic pulp, SWP, with the chemical pulp, NBKP. This conductive film is dotted in Fig. 8 and Fig. 9 with the mark □.

Fig. 8 shows that the conductive film having the surface resistivity of less than $1 \times 10^3 \Omega \cdot$ cm, which is far below the value of $1 \times 10^6 \Omega \cdot$ cm, is obtainable and that the conductive film having the smaller surface resistivity is obtainable in proportion to the increase in the mixing ratio of the nickel-coated carbon fiber. The surface resistivity of both conductive films is found to be rapidly reduced to the value of $1 \times 10^1 \Omega \cdot$ cm or less if the nickel-coated carbon fiber is incorporated by the amount of more than 1 to 1.5% by volume.

Fig. 9 shows that with respect to the opacity the conductive film containing no NBKP indicates the nearly similar tendency to the conductive film of Fig. 7, which is incorporated with the stainless steel fiber. The conductive film containing NBKP is shown in Fig. 9 to have a relatively high opacity and likely to raise its opacity in proportion to the increase in the mixing ratio of the conductive nickel-coated carbon fiber. However, the NBKP-containing film with the opacity of less than 30% may be obtainable by incorporating the nickel-coated carbon fiber by the amount of less than 4% by volume.

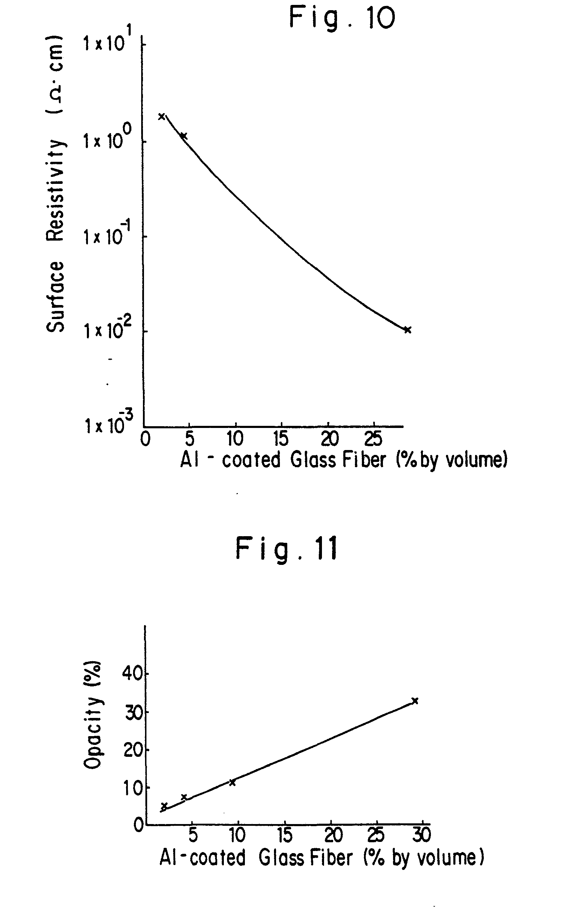

Fig. 10 illustrates the relation between the surface resistivity of the conductive film and the mixing ratio of the aluminum-coated glass fiber incorporated therein. Fig. 11 illustrates the relation between the opacity of the same conductive film and the mixing ratio of the same conductive fiber.

The conductive film of Fig. 10 and Fig. 11 was produced in the same manner as in Fig. 6 and Fig. 7

7

except for employing as the conductive fiber the commercially available aluminum-coated glass fiber (product of Diamond Shamrock Corp., average fiber length: 4 mm, diameter: 20 μm, specific gravity: 2.6).

As apparent from Fig. 10, the conductive film thus produced has a sufficiently low surface conductivity of less than $1 \times 10 \ \Omega \cdot cm$.

With respect to the opacity of this conductive film, the increasing rate of opacity to the increase in the mixing ratio of the aluminum-coated glass fiber was found to be relatively small since the employed conductive fiber had relatively large diameter of 20 μm. The conductive film with the transparency of less than 30% may be obtainable by adjusting the incorporating amount of the aluminum-coated glass fiber to 30% by volume or less, and the film with the opacity of less than 20% may be obtainable by adjusting the incorporating amount of the same conductive fiber to 10% by volume or less.

In the present invention, to enhance the transparency of the conductive film, a thermoplastic resin such as hot melt wax, terpenpolymer, alkyl acrylate polymer and vinyl copolymer, a thermosetting resin of low molecular weight such as phenol resin, urea formaldehyde resin, melamine formaldehyde resin, alkyd resin and phthalic polyester, a photopolymerizable monomer or oligomer such as acrylic acid ester and methacrylic acid ester and other known additives, those additives having a refractive index equal to or lower than that of cellulose and a melting point nearly equal to that of the thermoplastic synthetic pulp, may be incorporated into the mixture for forming the raw paper sheet or may be coated on the raw paper sheet followed by drying to permeate into the raw sheet. Cellulose fiber other than the chemical pulp, for instance, mechanical pulp and semisynthetic fiber such as rayon may also be included and dispersed in the conductive film in the range of maintaining the effects of the present invention. In addition, binders, surfactants, reinforcing agents of paper strength, antifoaming agents, etc. may be added to the mixture for forming the raw paper sheet. Dampening the raw sheet with steam before the heat-treatment by the super calender and raising the linear pressure in the range that the conductive fiber is hardly broken thereby are included in the scope of this invention, which advantageously enhance the transparency of the conductive film. Besides, a hot air heater, an infrared heater and the like are employable in the step of heat-treatment under pressure. It is preferable to carry out the step of forming the raw paper sheet at a temperature below the softening point of thermoplastic synthetic pulp.

The conductive film according to the present invention has the transparency equal to or higher than that of glassine paper as well as the antistatic and heat-sealing properties.

According to the invention, an optional surface resistivity may be offered to the conductive film by adjusting the mixing ratio of the conductive fiber. The conductive film having the surface resistivity of $1 \times 10^8$ to $1 \times 10^0 \Omega \cdot cm$ is suitable for a package preventing the dust adhesion and other electrostatic faults, and the film having that of $1 \times 10^0$ to $1 \times 10^{-2} \Omega \cdot cm$ is suitable for use in the field requiring the shielding effect of electromagnetic waves.

The conductive film may be laminated with other transparent film or other partially opaque film, or may be embossed while forming partially opaque areas therein.

The present invention will be more specifically described with the aid of the following specific, but non-limiting examples. In Tables 2—10, 1 kg (force)=9.80665 N.

Example 1

A given quantity of thermoplastic synthetic pulp, SWP® UL400 (product of Mitsui Petroleum Chemical Co., Ltd. polyethylene resin, m.p.: 122°C, specific gravity: 0.9), was put into warm water of 50°C so that the concentration thereof became 3% by weight, and then agitated for 20 min to disperse. Needle-leaf tree bleached kraft pulp (NBKP) was beaten by means of a beater until the beating degree thereof became 300 ml CSF. Carbon fiber (product of Kureha Chemical Industry, Ltd., Carbon Fiber C-203, graphitized grade, average fiber length: 3.0 mm, diameter: 12.5 μm, specific gravity: 1.6) was dispersed into water so that the concentration thereof became 1% by weight, and then added with a small amount of antifoaming agent, Trimin® DF130 (product of Miyoshi Yushi Co., Ltd.).

These three materials were put into a mixing vessel so that the mixing ratio of SWP/NBKP/CF=70/30/5 parts by weight was obtained, and then agitated for 10 min. Thereafter, a dispersing agent, PEO®-PF (product of Seitetsu Kagaku Co., Ltd.), was added thereto by the amount of 0.06 parts by weight to the resultant mixture. The resultant mixture was processed into a raw paper sheet by means of a paper machine.

In the above-mentioned manner, two raw paper sheet was produced; one had the basis weight of about 50 g/m² and the other had the basis weight of about 30 g/m². The drying of each sheet was carried out at 80 to 100°C. The dried sheet was heat-treated at 130°C under the linear pressure of 58.8 kN/m (60 Kg/cm) by a super calender to produce a conductive film of this invention.

The properties of both the raw paper sheet and the conductive film are indicated in the following Table 2.

TABLE 2

| | Raw paper, film of basis weight around 30 g/m² | | Raw paper, film of basis weight around 50 g/m² | |
|---|---|---|---|---|
| | Raw paper sheet | Conductive film | Raw paper sheet | Conductive film |
| Basis weight (g/m²) | 32.8 | 30.4 | 48.8 | 48.6 |
| Thickness (μm) | 85.3 | 42.2 | 114.4 | 65.0 |
| Density (g/cm³) | 0.39 | 0.72 | 0.43 | 0.75 |
| Opacity (%) | 90.3 | 13.7 | 96.1 | 24.0 |
| Brightness (%) | 78.1 | — | 76.9 | — |
| Air permeability (sec/100 ml) | 6 | 8,800 | 11 | 89,000 |
| Tensile strength (longitudinal) (kg) | 0.97 | 1.55 | 1.82 | 3.65 |
| Heat-seal strength (longitudinal) (g/10 mm) | — | 370 | — | 460 |
| Surface resistivity ($\Omega \cdot$ cm) | $>10^8$ | $7.4\times10^1$ | $>10^8$ | $3.2\times10^0$ |
| Water-vapor permeability (g/m²/24 hr) | 6,057 | 164 | 5,945 | 53 |

The heat-seal strength in Table 2 was determined based on TAPPI Standard T517-69 under the following conditions.

Heat-seal
applied pressure 196 kPa (2 kg/cm²)
sealing time 1 sec
temperature 150°C
seal width 10 mm

Tensile test
peeling speed 50 mm/min
chuck interval 10 cm
specimen width 2.5 cm
universal tensile tester ("Tensilon" manufactured by Toyo-Baldwin Co., Ltd.)

Each raw paper sheet had high brightness and high opacity, as shown in Table 2, and had an appearance of wood free paper since the black carbon fiber incorporated therein was inconspicuous due to its small mixing ratio. The opacity of the conductive film was nearly the same as that of glassine paper or less, and the packed contents lapped with the conductive film could be observed therethrough. The low air permeability of the conductive film, i.e., the long time required for a given quantity of air to permeate therethrough, and the low water-vapor permeability of the conductive film were due to the fusion of thermoplastic synthetic pulp. When one liter of water was put into a package produced by heat-sealing the conductive film and left as it was for a long time, there could be observed no percolation of water. The tensile strength of the conductive film was improved and higher than the raw paper sheet by 1.6 to 2 times. The heat-seal strength of the conductive film was likewise sufficient.

Example 2
A conductive film was produced by preparing a mixture of synthetic resin pulp (SWP)/chemical pulp (NBKP)/carbon fiber (70/30/2 parts by weight, 69/30/1% by volume) followed by subjecting to the paper machine to form a raw paper sheet with basis weight of about 50 g/m², and then by heat-treating under pressure by means of the super calender in the same manner as in Example 1.

9

The thus produced conductive film had the opacity of 20.5% and the surface resistivity of $1 \times 10^7 \Omega \cdot$ cm. The film was suitable for a package preventing the dust adhesion.

Example 3

In this example, there was obtained a conductive film by making the mixing ratio of synthetic pulp low and making that of chemical pulp high.

The conductive film was produced by preparing a mixture of SWP/NBKP/CF (50/50/3 parts by weight, 49/49/2% by volume) followed by subjecting to the paper machine to form the raw paper sheet with basis weight of about 30 g/m$^2$, and then by heat-treating under pressure by means of the super calender in the same manner as in Example 1.

The thus produced conductive film had basis weight of 31.2 g/m$^2$, density of 0.68 g/cm$^3$, opacity of 28.5%, air permeability of 4000 sec/100 ml, tensile strength (longitudinal) of 26.6 N (2.71 kg), water-vapor permeability of 333 g/m$^2$/24 hr, heat-seal strength (longitudinal) of 2.26 N (230 g)/10 mm, surface resistivity of $2 \times 10^4 \Omega \cdot$ cm.

Comparing the conductive film obtained in this example with the conductive film of Example 1 which had the basis weight of 30 g/m$^2$, it was found that the transparency, air permeability and heat-seal strength were all lowered, but the water-vapor permeability and tensile strength were increased.

Taking into the consideration the smaller density, the fear of breaking the carbon fiber and the surface resistivity of the conductive film in this example, the mixing ratio of the synthetic pulp in this example was considered to be nearly corresponding to the minimum amount to be added. However, the conductive film produced in this example was satisfactory for use in a conductive container.

Example 4

A thermoplastic synthetic pulp, ES-chop® (product of Chisso Corp., composite fiber of polyethylene and polypropylene, m.p.: 165—170°C, fiber length: 5 mm, 1/3 tex (3 denier), specific gravity: 0.9), was blended with polyvinyl alcohol fibrous binder (specific gravity: 1.3) in the blending ratio of 90/10 (by weight). Then, 5 parts by weight of carbon fiber was added to 100 parts by weight of the blend.

The resultant mixture was subjected to the paper machine in the same manner as in Example 1 to form the raw paper sheet with basis weight of about 50 g/m$^2$. The thus formed sheet was subsequently heat-treated at 180°C under the linear pressure of 58.8 kN/m (60 kg/cm) by means of the super calender together with an infrared heater.

The properties of the obtained conductive film are indicated in the following Table 3.

TABLE 3

|  | Raw paper sheet | Conductive film |
|---|---|---|
| Basis weight (g/m$^2$) | 47.5 | 55.7 |
| Thickness (μm) | 193 | 85 |
| Density (g/cm$^3$) | 0.25 | 0.66 |
| Air permeability (sec/100 ml) | 5 | 4000 |
| Tensile strength (kg/15 mm) | 2.12 | 2.15 |
| Opacity (%) | 51.9 | 11.9 |
| Surface resistivity ($\Omega \cdot$ cm) | $<10^8$ | $1.28 \times 10^0$ |

Comparing with Example 1, the conductive film of this example was found to be more flexible and bulky and to have more excellent processibility for making a package and sufficient transparency.

The conductive film was satisfactory for use in the field requiring the shielding effect of electromagnetic waves.

Example 5

A conductive film was produced by mixing thermoplastic synthetic pulp (SWP)/chemical pulp (NBKP)/carbon fiber (70/30/10 parts by weight, 66/29/5 parts by volume) followed by subjecting to the paper machine to form the raw paper sheet with basis weight of about 50 g/m$^2$, and then by heat-treating under pressure by means of the super calender.

The thus produced conductive film had basis weight of 49.1 g/m$^2$, opacity of 29.1%, air permeability of

10

43100 sec/100 ml, water-vapor permeability of 94 g/m$^2$/24 hr and surface resistivity of $5.7 \times 10^{-1} \Omega \cdot$ cm. The opacity of the conductive film was relatively high and very near to the limit of transparency.

The conductive film of this example was suitable for a package requiring the shielding effect of electromagnetic wave.

Example 6

In this example, there were produced two conductive films in the same manner as in Example 1 except for employing a mixture of SWP/CF (95/5 parts by weight, 97/3 parts by volume) or a mixture of SWP/polyvinyl alcohol fibrous binder (PVA)/CF (85.5/9.5/5 parts by weight, 90/7/3 parts by volume).

The properties of each conductive film thus produced are indicated in the following Table 4.

TABLE 4

| Mixing ratio (parts by weight) (parts by volume) | Raw paper sheet | | Conductive film | |
|---|---|---|---|---|
| | SWP/CF (95/5) (97/3) | SWP/PVA/CF (85.5/9.5/5) (90/7/3) | SWP/CF (95/5) (97/3) | SWP/PVA/CF (85.5/9.5/5) (90/7/3) |
| Basis weight (g/m$^2$) | 49.2 | 49.4 | 50.8 | 48.7 |
| Thickness (µm) | 139 | 141 | 57 | 54 |
| Density (g/cm$^3$) | 0.35 | 0.35 | 0.89 | 0.90 |
| Air permeability (sec/100 ml) | 2 | 3 | ∞ | ∞ |
| Tensile strength (kg/15 mm) | 0.15 | 0.61 | 1.14 | 1.24 |
| Opacity (%) | 96.1 | 95.9 | 3.9 | 4.4 |
| Surface resistivity ($\Omega \cdot$ cm) | $>10^8$ | $>10^8$ | $2.24 \times 10^0$ | $5.10 \times 10^0$ |

Comparing with Example 1, the conductive film of this example had a lower tensile strength, but had a better machinability for the paper machine. The transparency thereof was highest.

The conductive film of this example was suitable for use in the field requiring the shielding effect of electromagnetic waves.

Example 7

A given quantity of thermoplastic synthetic pulp, SWP® UL410 (product of Mitsui Petroleum Chemical Co., Ltd. polyethylene resin, m.p.: 123°C), was put into warm water of 50°C so that the concentration thereof became 3% by weight, and then agitated to disperse. Stainless steel fiber (SSF) (product of Nippon Metallurgy Co., Ltd., average fiber length: 3 mm, diameter: 8 µm) was dispersed into water of normal temperature so that the concentration thereof became 1% by weight, and then added with a small amount of antifoaming agent, Trimin® DF130 (product of Miyoshi Yushi Co., Ltd.).

These two materials were put into a mixing vessel so that the mixing ratio of SWP/SSF=60/40 parts by weight (SWP/SSF=93/7 parts by volume) was obtained, and then agitated for 10 min. Thereafter, a dispersing agent, PEO®-PF (product of Seitetsu Kagaku Co., Ltd.), was added thereto by the amount of 0.06 parts by weight to the resultant mixture. The resultant mixture was subjected to a paper machine to form a raw paper sheet with basis weight of about 50 g/m$^2$. The drying of the sheet was carried out at 80 to 100°C. The dried sheet was subsequently heat-treated at 130°C under the linear pressure of 58.8 kN/m (60 Kg/cm) by a super calender to produce a conductive film of this invention.

The properties of the thus produced conductive film are listed in the following Table 5.

TABLE 5

|  | Conductive film |
|---|---|
| Basis weight (g/m$^2$) | 50.7 |
| Thickness (µm) | 43 |
| Density (g/cm$^3$) | 1.18 |
| Opacity (%) | 15.1 |
| Air permeability (sec/100 ml) | ∞ |
| Tensile strength (Kg) | 1.27 |
| Heat-seal strength (g/10 mm) | 844 |
| Surface resistivity (Ω · cm) | $1.81 \times 10^{-2}$ |
| Water-vapor permeability (g/m$^2$/24 hr) | 19.8 |

The opacity of the conductive film was nearly the same as that of glassine paper or less, and the packed contents lapped with the conductive film could be observed therethrough. The low air permeability and low water-vapor permeability of the conductive film were due to the fusion of synthetic resin pulp. When one liter of water was put into a package produced by heat-sealing the conductive film and left as it was for a long time, there could be observed no percolation of water. The heat-seal strength of the conductive film was likewise sufficient.

Example 8

In this example, four conductive films were produced in the same manner as in Example 7 while changing the mixing ratio of each SWP or SSF as shown in the following Table 6.

The properties of each conductive film are listed in Table 6.

TABLE 6

| Mixing ratio (parts by weight) | SWP | 95 | 92.5 | 90 | 80 |
|---|---|---|---|---|---|
|  | SSF | 5 | 7.5 | 10 | 20 |
| SSF (% by volume) |  | 0.6 | 0.9 | 1.3 | 2.8 |
| Basis weight (g/m$^2$) |  | 51.5 | 50.8 | 53.4 | 53.5 |
| Thickness (µm) |  | 56 | 56 | 54 | 47 |
| Density (g/cm$^3$) |  | 0.92 | 0.91 | 0.99 | 1.14 |
| Opacity (%) |  | 3.3 | 3.6 | 4.5 | 6.1 |
| Air permeability (sec/100 ml) |  | ∞ | ∞ | ∞ | ∞ |
| Tensile strength (Kg/15 mm) |  | 1.40 | 1.64 | 1.36 | 1.26 |
| Surface resistivity (Ω · cm) |  | $2.1 \times 10^1$ | $4.2 \times 10^0$ | $2.4 \times 10^0$ | $7.7 \times 10^{-1}$ |

Each conductive film was found to have excellent transparency.

Example 9

In this example, three conductive films were produced in the same manner as in Example 7 except for employing as the conductive fiber the carbon fiber (product of Kureha Chemical Industry, Ltd., carbon fiber prepared from pitch, average fiber length: 6 mm, diameter: 12.5 µm) of which surface was coated with nickel in thickness of about 1 µm by chemical plating (Ni-CF conductive fiber).

The properties of the thus produced conductive film are listed in the following Table 7.

TABLE 7

| Mixing ratio (parts by weight) | SWP | 97 | 95 | 90 |
|---|---|---|---|---|
| | Ni-CF | 3 | 5 | 10 |
| Ni-CF (% by volume) | | 0.8 | 1.4 | 2.9 |
| Basis weight (g/cm$^2$) | | 51.3 | 49.4 | 49.6 |
| Thickness (µm) | | 58 | 62 | 60 |
| Density (g/cm$^3$) | | 0.88 | 0.79 | 0.83 |
| Opacity (%) | | 4.9 | 6.9 | 13.8 |
| Air permeability (sec/100 ml) | | ∞ | ∞ | 69000 |
| Tensile strength (Kg/15 mm) | | 1.32 | 1.28 | 1.17 |
| Surface resistivity (Ω · cm) | | $5.4 \times 10^2$ | $2.8 \times 10^1$ | $1.8 \times 10^0$ |

Example 10

A conductive film was produced in the same manner as in Example 9 while 20% by volume of synthetic pulp SWP was displaced with chemical pulp. The employed chemical pulp was a needle-leaf tree bleached kraft pulp (NBKP) which had been beaten by means of a beater until the beating degree thereof became 300 ml CFS (Canadian Standard Freeness tester), and added to a slurry in which both SWP and Ni-CF were dispersed.

The properties of the obtained conductive film are shown in the following Table 8.

TABLE 8

| | SWP | 77.6 | 76 | 72 |
|---|---|---|---|---|
| Mixing ratio (parts by weight) | NBKP | 19.4 | 19 | 18 |
| | Ni-CF | 3 | 5 | 10 |
| Ni-CF (% by volume) | | 0.8 | 1.4 | 2.9 |
| Basis weight (g/cm$^2$) | | 50.9 | 51.1 | 50.6 |
| Thickness (µm) | | 58 | 56 | 55 |
| Density (g/cm$^3$) | | 0.88 | 0.92 | 0.92 |
| Opacity (%) | | 12.3 | 13.5 | 19.7 |
| Air permeability (sec/100 ml) | | ∞ | ∞ | ∞ |
| Tensile strength (Kg/15 mm) | | 2.30 | 2.27 | 2.11 |
| Surface resistivity (Ω · cm) | | $1.9 \times 10^2$ | $8.5 \times 10^0$ | $2.2 \times 10^0$ |

Comparing with the conductive film containing no NBKP in Example 9, the conductive film of this example had a relatively large opacity but it was enough to observe the packed contents therethrough when used as a package.

Example 11

A conductive film was produced in the same manner as in Example 7 except for employing as the conductive fiber a commercially available aluminum-coated glass fiber (Al-GF conductive fiber) (Product of Diamond Shamrock Corp., average fiber length: 4 mm, diameter of core glass: 13 µm, aluminum coat: about 3.5 µm, total diameter: 20 µm).

The properties of the thus produced conductive film are shown in the following Table 9.

**0 100 670**

TABLE 9

| Mixing ratio (parts by weight) | SWP | 95 | 90 | 80 |
|---|---|---|---|---|
| | Al-GF | 5 | 10 | 20 |
| Al-GF (% by volume) | | 1.8 | 3.7 | 8.0 |
| Basis weight (g/cm²) | | 50.7 | 52.7 | 52.3 |
| Thickness (µm) | | 55 | 54 | 54 |
| Density (g/cm³) | | 0.92 | 0.97 | 0.97 |
| Opacity (%) | | 5.0 | 6.9 | 11.3 |
| Air permeability (sec/100 ml) | | $\infty$ | 50000 | 10000 |
| Tensile strength (Kg/15 mm) | | 1.06 | 1.00 | 0.77 |
| Surface resistivity ($\Omega \cdot$ cm) | | $1.7 \times 10^{0}$ | $1.1 \times 10^{0}$ | $2.2 \times 10^{-1}$ |

The conductive film dispersed the silver colored aluminum coated glass fiber in the transparent resin matrix and had a wholly silver white colored and transparent appearance.

Example 12

Example 7 was repeated except for employing as the thermoplastic synthetic pulp ES-Chop® (product of Chisso Corp., composite fiber of polyethylene and polypropylene, m.p.: 165—170°C, fiber length: 5 mm, 3 denier) and polyvinyl alcohol fibrous binder (PVA). The mixing ratio of ES-Chop®/PVA/SSF was 72/8/20 parts by weight (90/7/3% by volume).

The properties of the obtained conductive film are listed in the following Table 10.

TABLE 10

| | |
|---|---|
| Basis weight (g/m²) | 49.8 |
| Thickness (µm) | 45 |
| Density (g/cm³) | 1.11 |
| Opacity (%) | 14.5 |
| Air permeability (sec/100 ml) | 5000 |
| Tensile strength (Kg/15 mm) | 2.11 |
| Surface resistivity ($\Omega \cdot$ cm) | $6.25 \times 10^{-2}$ |

Comparing with Example 7, the conductive film of this example had a slightly low opacity and a surface resistivity of same degree.

**Claims**

1. A process for the preparation of a conductive film for use as packaging for electronic parts, which process comprises mixing a thermoplastic synthetic pulp slurry with short conductive fibers, forming a raw paper sheet from the resultant mixture by means of paper-making apparatus and heating the raw paper sheet at a temperature higher than the melting point of the thermoplastic synthetic pulp, which melting point being from 100 to 260°C, and under a pressure of from 39.2 to 196.1 kN/m (40 to 200 kg/cm) employing a calender so as to obtain a conductive film comprising a transparent matrix of a thermoplastic resin having short conductive fibers in contact with one another dispersed therein and having a thickness of not more than 100 µm, an opacity of 30% or less and a surface resistivity of $1 \times 10^{8} \Omega \cdot$ cm or less.

2. A process according to claim 1 wherein the short conductive fibers are carbon fibers.

14

3. A process according to claim 2 wherein the carbon fibers have a length of from 1 to 25 mm and a diameter of from 5 to 30 µm.

4. A process according to claim 2 or 3 wherein the carbon fiber is mixed with the thermoplastic synthetic pulp slurry in an amount of from 0.5 to 20% by volume based on the total volume of the carbon fiber and the synthetic pulp.

5. A process according to claim 1 wherein the short conductive fibers are metal or metal-coated fibers selected from stainless steel fibers, aluminum fibers, brass fibers, carbon fibers coated with aluminum or nickel, and glass fibers coated with aluminum or nickel.

6. A process according to claim 5 wherein the metal or metal-coated fibers have a length of from 1 to 25 mm and a diameter of from 1 to 100 µm.

7. A process according to claim 6 wherein the metal or metal-coated fibers have a length of from 3 to 15 mm and a diameter of 20 µm or less.

8. A process according to any one of claims 5 to 7 wherein the metal or metal-coated fiber is mixed with the thermoplastic synthetic pulp slurry in an amount of from 0.5 to 30% by volume based on the total volume of fiber and the synthetic pulp.

9. A process according to any one of the preceding claims wherein a slurry of a thermoplastic synthetic pulp and a chemical pulp is mixed with the said conductive fibers, the chemical pulp being present in an amount of less than 50% by volume based on the total volume of the thermoplastic synthetic pulp and the chemical pulp.

10. A process according to claim 9 wherein the said amount of the chemical pulp is less than 30% by volume based on the total volume of the thermoplastic synthetic pulp and the chemical pulp.

11. A process according to claim 9 or 10 when appendant to any one of claims 1, 2 or 3 wherein the carbon fibers are present in an amount of less than 6% by volume based on the total volume of the fibers, thermoplastic synthetic pulp and chemical pulp.

12. A process according to claim 9 or 10 when appendant to any one of claims 1, 5, 6 or 7 wherein the metal or metal-coated fibers are present in an amount of less than 15% by volume based on the total volume of the fibers, thermoplastic synthetic pulp and chemical pulp.

13. A process according to any one of the preceding claims which is effected such that the conductive film that is obtained has a surface resistivity of $1 \times 10^6 \Omega \cdot$ cm or less.

14. A process according to any one of the preceding claims wherein cellulose fibers are present in the transparent matrix that is obtained.

15. A laminate of a conductive film obtainable by a process as claimed in any one of the preceding claims and another transparent or partially opaque film.

16. A conductive film obtainable by a process as claimed in any one of claims 1 to 14 which has been embossed while forming partially opaque areas therein.


**Patentansprüche**

1. Verfahren zur Herstellung eines leitfähigen Films zur Verwendung als Verpackung für Elektronik-Teile, dadurch gekennzeichnet, daß man die Aufschlämmung eines thermoplastischen synthetischen Zellstoffbreies mit kurzen leitfähigen Fasern, vermischt, aus dem entstandenen Gemisch mittels Papiergewinnungsvorrichtungen eine Rohpapierbahn erzeugt, und die Rohpapierbahn auf eine Temperatur erhitzt, die höher ist als der Schmelzpunkt des thermoplastischen synthetischen Zellstoffbreies, wobei dieser Schmelzpunkt zwischen 100 und 260°C liegt, unter einem Druck von 39,2 bis 196,1 kN/m (40 bis 200 kg/cm) und unter Verwendung eines Kalanders, um einen leitfähigen Film zu erhalten, der aus einer transparenten Matrix aus einem thermoplastischen Harz besteht, in welchem kurze leitfähige Fasern in Kontakt miteinander dispergiert sind, und der eine Dicke von nicht mehr als 100 µm, eine Trübung von 30% oder weniger und einen Oberflächenwiderstand von $1 \times 10^8 \Omega \cdot$ cm oder weniger aufweist.

2. Verfahren nach Anspruch 1, dadurch gekennzeichnet, daß die kurzen leitfähigen Fasern Kohlenstoffasern sind.

3. Verfahren nach Anspruch 2, dadurch gekennzeichnet, daß die Kohlenstoffasern eine Länge von 1 bis 25 mm und einen Durchmesser von 5 bis 30 µm haben.

4. Verfahren nach Anspruch 2 oder 3, dadurch gekennzeichnet, daß die Kohlenstoffaser mit der Aufschlämmung des thermoplastischen Zellstoffbreies in einer Menge von 0,5 bis 20 Vol.-%, bezogen auf das Gesamtvolumen von Kohlenstoffaser und synthetischem Zellstoffbrei vermischt wird.

5. Verfahren nach Anspruch 1, dadurch gekennzeichnet, daß die kurzen leitfähigen Fasern Metall- oder metallbeschichtete Fasern, nämlich Fasern aus nichtrostendem Stahl, Aluminiumfasern, Messingfasern, mit Aluminium oder Nickel beschichtete Kohlenstoffasern oder mit Aluminium oder Nickel beschichtete Glasfasern sind.

6. Verfahren nach Anspruch 5, dadurch gekennzeichnet, daß die Metall- oder metallbeschichteten Fasern eine Länge von 1 bis 25 mm und einen Durchmesser von 1 bis 100 µm haben.

7. Verfahren nach Anspruch 6, dadurch gekennzeichnet, daß die Metall- oder metallbeschichteten Fasern eine Länge von 3 bis 15 mm und einen Durchmesser von 20 µm oder weniger haben.

8. Verfahren nach einem der Ansprüche 5 bis 7, dadurch gekennzeichnet, daß die Metall- oder

## 0 100 670

metallbeschichtete Faser mit der Aufschlämmung des thermoplastischen synthetischen Zellstoffbreies in einer Menge von 0,5 bis 30 Vol.-%, bezogen auf das Gesamtvolumen aus Faser und synthetischem Zellstoffbrei, vermischt wird.

9. Verfahren nach einem der vorangegangenen Ansprüche, dadurch gekennzeichnet, daß eine Aufschlämmung aus einem thermoplastischen synthetischen Zellstoffbrei und ein chemischer Zellstoffbrei mit diesen leitfähigen Fasern vermischt werden, wobei der chemische Zellstoffbrei in einer Menge von weniger als 50 Vol.-%, bezogen auf das Gesamtvolumen aus thermoplastischem synthetischem Zellstoffbrei und chemischem Zellstoffbrei, enthalten ist.

10. Verfahren nach Anspruch 9, dadurch gekennzeichnet, daß diese Menge an chemischem Zellstoffbrei weniger als 30 Vol.-%, bezogen auf das Gesamtvolumen aus thermoplastischem synthetischem Zellstoffbrei und chemischem Zellstoffbrei ausmacht.

11. Verfahren nach Anspruch 9 oder 10, wenn abhängig von einem der Ansprüche 1, 2 oder 3, dadurch gekennzeichnet, daß die Kohlenstoffasern in einer Menge von weniger als 6 Vol.-%, bezogen auf das Gesamtvolumen von Faser, thermoplastischem synthetischem Zellstoffbrei und chemischem Zellstoffbrei, enthalten sind.

12. Verfahren nach Anspruch 9 oder 10, wenn abhängig von einem der Ansprüche 1, 5, 6 oder 7, dadurch gekennzeichnet, daß die Metall- oder metallbeschichteten Fasern in einer Menge von weniger als 15 Vol.-% bezogen auf das Gesamtvolumen aus Faser, thermoplastischem synthetischem Zellstoffbrei und chemischem Zellstoffbrei enthalten sind.

13. Verfahren nach einem der vorangegangenen Ansprüche, dadurch gekennzeichnet, daß es in einer Weise durchgeführt wird, daß der erhaltene leitfähige Film einen Oberflächenwiderstand von $1 \times 10^6 \Omega \cdot cm$ oder weniger aufweist.

14. Verfahren nach einem der vorangegangenen Ansprüche, dadurch gekennzeichnet, daß in der erhaltenen transparenten Matrix Zellulosefasern enthalten sind.

15. Ein Laminat aus einem leitfähigen Film, erhältlich durch ein Verfahren gemäß einem der vorangegangenen Ansprüche, und aus einem anderen transparenten oder teilweise opakem Film.

16. Ein leitfähiger Film, erhältlich durch ein Verfahren gemäß einem der Ansprüche 1 bis 14, dadurch gekennzeichnet, daß er ein getriebenes Aussehen aufweist, indem teilweise opake Bereiche in ihm erzeugt worden sind.

## Revendications

1. Procédé de préparation d'un film conducteur destiné à être utilisé en tant qu'emballage pour des éléments électroniques, lequel procédé consiste à mélanger une suspension de pâte synthétique thermoplastique avec de courtes fibres conductrices, à former à partir du mélange résultant une feuille de papier brut à l'aide d'un appareil de fabrication de papier et à chauffer la feuille de papier brut à une température supérieure au point de fusion de la pâte synthétique thermoplastique, ce point de fusion étant de 100 à 260°C, et sous une pression de 39,2 à 196,1 kN/m (40 à 200 kg/cm) en utilisant une calandre, de manière à obtenir un film conducteur comportant une matrice transparente en une résine thermoplastique et présentant de courtes fibres conductrices en contact les unes avec les autres, qui y sont dispersées et ayant une épaisseur ne dépassant pas 100 μm, une opacité de 30% ou moins et une résistivité superficielle de $1 \times 10^8 \Omega \cdot cm$ ou moins.

2. Procédé selon la revendication 1, dans lequel les courtes fibres conductrices sont des fibres de carbone.

3. Procédé selon la revendication 2, dans lequel les fibres de carbone ont une longueur de 1 à 25 mm et un diamètre de 5 à 30 μm.

4. Procédé selon la revendication 2 ou 3, selon lequel on mélange la fibre de carbone avec la suspension de pâte synthétique thermoplastique dans une proportion de 0,5 à 20% en volume rapporté au volume total de la fibre de carbone et de la pâte synthétique.

5. Procédé selon la revendication 1, dans lequel les courtes fibres conductrices sont des fibres métalliques ou revêtues de métal choisies parmi des fibres d'acier inoxydable, des fibres d'aluminium, des fibres de laiton, des fibres de carbone revêtues d'aluminium ou de nickel, et des fibres de verre revêtues d'aluminium ou de nickel.

6. Procédé selon la revendication 5, dans lequel les fibres métalliques ou revêtues de métal ont une longueur de 1 à 25 mm et un diamètre de 1 à 100 μm.

7. Procédé selon la revendication 6, dans lequel les fibres métalliques ou revêtues de métal ont une longueur de 3 à 15 mm et un diamètre de 20 μm ou moins.

8. Procédé selon l'une quelconque des revendications 5 à 7, selon lequel on mélange la fibre métallique ou revêtue de métal avec la suspension de pâte synthétique thermoplastique dans une proportion de 0,5 à 30% en volume rapporté au volume total de la fibre et de la pâte synthétique.

9. Procédé selon l'une quelconque des revendications précédentes, selon lequel on mélange avec lesdites fibres conductrices une suspension d'une pâte synthétique thermoplastique et une pâte chimique, la pâte chimique étant présente dans une proportion inférieure à 50% en volume rapporté au volume total de la pâte synthétique thermoplastique et de la pâte chimique.

10. Procédé selon la revendication 9, dans lequel ladite proportion de la pâte chimique est inférieure à 30% en volume rapporté au volume total de la pâte synthétique thermoplastique et de la pâte chimique.

11. Procédé selon l'une quelconque des revendications 9 ou 10 lorsqu'elles dépendent de l'une quelconque des revendications 1, 2 ou 3, dans lequel les fibres de carbone sont présentes dans une proportion inférieure à 6% en volume rapporté au volume total des fibres, de la pâte synthétique thermoplastique et de la pâte chimique.

12. Procédé selon la revendication 9 ou 10 lorsqu'elles dépendent de l'une quelconque des revendications 1, 5, 6 ou 7, dans lequel les fibres métalliques ou revêtues de métal sont présentes dans une proportion inférieure à 15% en volume rapporté au volume total des fibres, de la pâte synthétique thermoplastique et de la pâte chimique.

13. Procédé selon l'une quelconque des revendications précédentes, qui est exécuté de manière telle que le film conducteur que l'on obtient présente une résistivité superficielle de $1 \times 10^6 \Omega \cdot$ cm ou moins.

14. Procédé selon l'une quelconque des revendications précédentes, dans lequel des fibres de cellulose sont présentes dans la matrice transparente que l'on obtient.

15. Stratifié d'un film conducteur pouvant être obtenu par un procédé tel que revendiqué dans l'une quelconque des revendications précédentes et d'un autre film transparent ou partiellement opaque.

16. Film conducteur pouvant être obtenu par un procédé tel que revendiqué dans l'une quelconque des revendications 1 à 14 et qui a été gaufré tout en y formant des zones partiellement opaques.

# Fig. 1

# Fig. 2

# Fig. 3

Fig. 4

Fig. 5

# Fig. 6

## Fig. 7

# Fig. 8

# Fig. 9

# Fig. 10

Surface Resistivity ($\Omega \cdot cm$) vs. Al – coated Glass Fiber (% by volume)

# Fig. 11

Opacity (%) vs. Al-coated Glass Fiber (% by volume)